Europäisches Patentamt

(19) European Patent Office

Office européen des brevets

(11) Numéro de publication : **0 125 963**
**B1**

(12) # FASCICULE DE BREVET EUROPÉEN

(45) Date de publication du fascicule du brevet :
29.07.87

(21) Numéro de dépôt : 84400809.4

(22) Date de dépôt : 20.04.84

(51) Int. Cl.⁴ : **D 04 H   1/00**, D 04 H   1/72, D 04 H   3/03

(54) **Perfectionnements aux dispositifs pour la formation de feutres de fibres.**

(30) Priorité : 20.04.83 FR 8306431

(43) Date de publication de la demande :
21.11.84 Bulletin 84/47

(45) Mention de la délivrance du brevet :
29.07.87 Bulletin 87/31

(84) Etats contractants désignés :
AT BE CH DE FR GB IT LI LU NL SE

(56) Documents cités :
FR-A- 1 572 789
FR-A- 1 601 585
FR-A- 2 274 968
US-A- 3 134 145

(73) Titulaire : **ISOVER SAINT-GOBAIN**
**Les Miroirs 18, avenue d'Alsace**
**F-92400 Courbevoie (FR)**

(72) Inventeur : **Potters, Michel**
**Jacob Castlaan 10**
**NL-4873 GT Etten-Leur (NL)**

(74) Mandataire : **Le Vaguerese, Sylvain Jacques et al**
**SAINT-GOBAIN RECHERCHE 39, quai Lucien Lefranc**
**F-93304 Aubervilliers Cedex (FR)**

Jouve, 18, rue St-Denis, 75001 Paris, France

## Description

L'invention est relative à des perfectionnements apportés aux techniques de formation de feutres, et notamment des feutres épais tels que ceux destinés à l'isolation thermique et acoustique.

De façon traditionnelle, la formation de feutres à partir de fibres véhiculées par un courant gazeux est conduite en faisant passer ce courant gazeux à travers un convoyeur de réception perforé qui retient les fibres. Pour fixer les fibres entre elles, un liant est pulvérisé sur les fibres au cours de leur trajectoire vers le convoyeur de réception. Ce liant est ensuite durci par exemple par un traitement thermique.

Cette technique est utilisée notamment pour la production de feutres de fibres minérales. En raison de l'importance de ce type de production, nous nous réfèrerons dans la suite à la formation de feutres de fibres de matériaux verriers. Néanmoins les perfectionnements selon l'invention sont applicables à tous les procédés de préparation de feutres, que les fibres soient minérales ou organiques.

Une des difficultés rencontrées dans la préparation de ces feutres est liée à la distribution uniforme des fibres dans l'ensemble du feutre. Le courant gazeux portant les fibres présente ordinairement une section d'une dimension limitée qui est fonction, notamment, du dispositif de production des fibres. Aussi le courant gazeux ne parvient pas habituellement à couvrir toute la largeur du convoyeur et les fibres ne se répartissent pas uniformément.

Divers moyens ont été proposés pour améliorer la distribution des fibres sur le convoyeur. Parmi ces moyens, l'un des plus utiles en pratique est du type décrit dans le brevet US-A-3 134 145. Ce moyen consiste à faire passer le flux gazeux portant les fibres dans un conduit de guidage. Ce conduit est mobile et animé d'un mouvement d'oscillation qui dirige alternativement le flux gazeux d'un bord à l'autre du convoyeur de réception des fibres.

Par ce moyen, si les conditions d'utilisation sont convenablement choisies, les fibres se déposent sur toute la largeur du convoyeur.

Dans les techniques antérieures utilisant un conduit oscillant, notamment dans le brevet US-A-3 134 145, le mouvement est communiqué par une bielle fixée d'une part au conduit et d'autre part sur une manivelle ou un disque animé d'un mouvement de rotation suivant un axe perpendiculaire à l'axe de la bielle.

Ces dispositifs antérieurs comportent, en outre, des moyens mécaniques de réglage, par exemple de la longueur de la bielle, du point d'attache de la bielle sur la manivelle ou le disque, qui permettent respectivement de fixer la direction médiane et l'amplitude des oscillations communiquées au conduit. Si le fonctionnement de ces dispositifs est satisfaisant dans l'ensemble, leur réglage en cours de fonctionnement est délicat dans la mesure ou ils nécessitent d'intervenir sur des mécanismes en mouvement. Le mode de réglage proposé dans ces dispositifs ne se prête pas non plus a une automatisation.

L'invention a pour but de fournir une technique améliorée pour la distribution des fibres dans les feutres formés.

L'invention en particulier a pour but de permettre la modification de la distribution en cours de fonctionnement.

L'invention a aussi pour but de faire en sorte que la modification de la distribution des fibres soit conduite automatiquement, en fonction de variations de répartition des fibres mesurées en continu sur le feutre produit.

Ces buts sont atteints selon l'invention au moyen d'un dispositif nouveau de mise en mouvement du conduit de guidage.

Selon ce nouveau dispositif, le conduit de guidage est animé par une bielle dont le mouvement ne se situe pas dans un plan comme dans les dispositifs antérieurs. Cette bielle est fixée à chacune de ses extrémités par une articulation de cardan, d'une part sur le conduit de guidage, et d'autre part sur un élément animé d'un mouvement de rotation. L'axe de rotation de cet élément passe par le centre de l'articulation fixée sur le conduit lorsque celui-ci n'est pas animé d'oscillations. Le déplacement de cet axe à partir de cette position entraîne un mouvement d'oscillations, l'amplitude des oscillations étant d'autant plus grande que l'axe est plus éloigné du centre de l'articulation.

Quelle que soit la direction du déplacement de l'axe de rotation, il en résulte un mouvement oscillant. Pour des raisons de simplicité, le déplacement de l'axe de rotation correspond de préférence à un basculement de l'ensemble moteur engendrant la rotation.

L'invention est décrite en détail dans la suite en se référant aux planches de dessins annexées :

la figure 1 est une vue schématique d'une installation de formation de feutres de fibres, vue transversale par rapport au sens de progression du convoyeur de réception,

la figure 2 est une vue partielle agrandie de la figure 1 montrant de façon plus précise la constitution du dispositif de distribution des fibres,

les figures 3a et 3b sont des schémas montrant le mode de fonctionnement du dispositif entraînant le conduit de guidage.

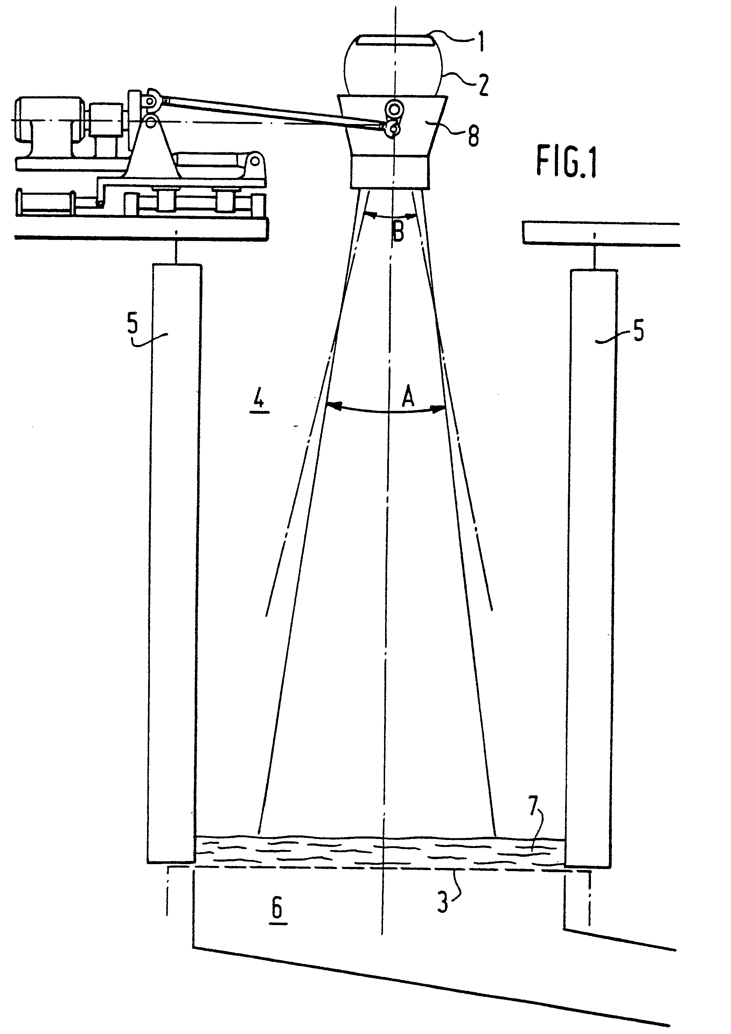

L'installation de formation de feutres de la figure 1 comprend un dispositif de formation des fibres, un ensemble de réception et des moyens de distribution.

Sur cette figure, le dispositif de formation est du type dans lequel le matériau à fibrer est projeté sous forme de filaments fins hors d'un centrifugeur présentant une multitude d'orifices. Les filaments sont ensuite entraînés et étirés par un courant gazeux dirigé verticalement de haut en bas. Ordinairement, le courant gazeux est à haute température ce qui permet de maintenir les filaments dans les conditions propices à l'étirage.

Les fibres entrainées par le courant gazeux forment une sorte de voile 2 annulaire autour et en dessous du centrifugeur 1.

Ce mode de formation des fibres a fait l'objet de nombreuses publications.

Bien entendu, l'invention n'est pas limitée à un mode particulier de formation des fibres. Elle englobe au contraire toutes les techniques dans lesquelles un feutre de fibres est constitué à partir de fibres véhiculées par un courant gazeux. L'exemple de la formation des fibres par cette technique de centrifugation a été choisi parce qu'il revêt une grande importance au plan industriel.

Dans ce type de formation, le voile de fibres se resserre sous le centrifugeur pour des raisons qui tiennent à la géométrie du dispositif de fibrage. Ensuite, au contact de l'atmosphère ambiante, le courant gazeux portant les fibres s'épanouit.

L'épanouissement du courant gazeux, nous pouvons le noter, est un phénomène tout à fait général qui est indépendant de la forme du courant à l'origine et donc du mode de formation des fibres utilisé.

Le courant gazeux portant les fibres est dirigé dans une enceinte 4 dont la base est constituée par un convoyeur 3. Cette enceinte est close latéralement de façon que le courant gazeux ne puisse être évacué autrement qu'en passant à travers le convoyeur perforé 3.

Latéralement des parois 5 canalisent le flux gazeux. Il peut s'agir, comme indiqué sur la figure 1, de parois mobiles. Ces parois présentent l'avantage de pouvoir être débarrassées en continu des fibres qui pourraient s'y accrocher de façon indésirable et ce d'autant plus facilement que les fibres ont reçu une composition de liant par pulvérisation sur leur trajet en direction du convoyeur. L'ensemble de pulvérisation n'est pas représenté.

L'observation du courant gazeux portant les fibres montre que son épanouissement est relativement lent. Dans le cas considéré, le courant gazeux adopte une forme conique dont l'angle d'ouverture A est de l'ordre d'une vingtaine de degrés. Les feutres préparés présentent très souvent une largeur de plus de deux mètres, et le courant à l'origine étant relativement étroit, on conçoit qu'il ne soit pas possible d'obtenir un flux suffisamment large pour couvrir toute la surface du convoyeur. C'est ce que montre la figure 1.

Sous le tapis convoyeur 3 les gaz passent dans le caisson 6 maintenu en dépression par rapport a l'enceinte 4, par des moyens d'aspiration non représentés.

Le caisson 6 est disposé de façon que l'aspiration se fasse sur toute la largeur du convoyeur 3. On évite ainsi la formation de turbulences indésirables dans l'enceinte 4. Dans une certaine mesure, l'aspiration uniforme favorise également une répartition régulière des fibres, les zones du convoyeur déjà chargées en fibres présentant une résistance supérieure au passage des gaz qui s'oppose à l'accumulation de fibres supplémentaires.

Néanmoins l'equilibre qui tend à s'établir sur le convoyeur par la présence des fibres elles-mêmes est insuffisant pour obtenir une répartition convenable sur un convoyeur dont la largeur est très supérieure à celle du courant gazeux. L'accumulation de fibres est plus importante au centre du convoyeur, c'est-à-dire sur la trajectoire directe du courant gazeux.

Pour améliorer la distribution des fibres un conduit de guidage 8 oscillant est disposé sur le trajet du courant gazeux. Le courant est canalisé par le conduit 8 dont les dimensions sont telles que son balancement dévie le courant l'obligeant à balayer toute la largeur du convoyeur 3.

Le conduit de guidage 8 est placé à la partie supérieure de l'enceinte 4, le plus loin possible du convoyeur de sorte que les changements de direction à imprimer au courant gazeux soient les plus petits possibles. En outre il est préférable de canaliser le courant gazeux alors que sa géométrie est bien définie, c'est-à-dire le plus près possible du dispositif de formation des fibres.

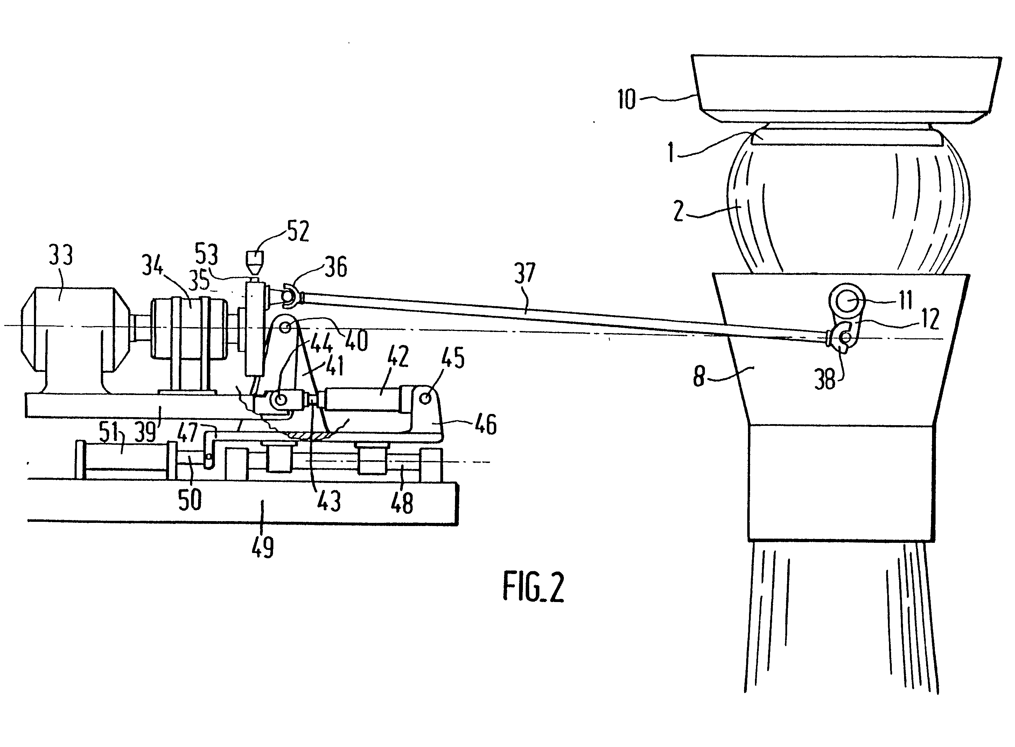

La figure 2 montre plus en détail le conduit de guidage 8 et le mécanisme qui l'anime dans une disposition selon l'invention.

Sur la figure 2, le conduit de guidage présente à sa partie supérieure une forme légèrement tronconique évasée en direction du dispositif de formation des fibres. Cette forme évasée facilite la canalisation des gaz d'étirage émis par un organe d'étirage annulaire 10 a la périphérie du centrifugeur 1.

Le conduit 8 est supporté par l'intermédiaire de deux pivots 11 engagés sur des paliers fixés sur des montants non représentés. L'axe de rotation est placé suffisamment haut sur le conduit pour que la disposition de l'ouverture de celui-ci vis-à-vis du courant gazeux soit peu modifiée par le mouvement d'oscillation.

Le mouvement est engendré par un ensemble moteur qui dans l'exemple représenté est constitué par un moteur variateur 33. Le mouvement est communiqué à un réducteur 34 puis au disque 35.

Une articulation de cardan 36 est montée sur ce disque de façon à pouvoir pivoter librement suivant son axe. Une boîte de roulements, non représentée, disposée dans le disque 35 assure la libre rotation du cardan sur le disque 35.

Une bielle 37 est fixée par une de ses extrémités au cardan 36 et par l'autre extrémité à un deuxième cardan 38. Le cardan 38 est également fixé à un bras 12 solidaire du conduit de guidage 8.

L'ensemble moteur est monté sur une plateforme 39 libre de pivoter autour d'un axe 40 porté par des paliers dans des pieds 41 disposés de part et d'autre de la plateforme.

Sur la figure 2, le pied de face est ôté pour plus de clarté.

La position de la plateforme 39, et donc de l'ensemble moteur qu'elle porte, est réglée par un vérin hydraulique 42 dont la tige 43 s'articule sur un axe 44 solidaire de la plateforme 39. Le vérin 42 est lui-même monté pivotant sur un axe 45 porté par des paliers situés sur des montants 46 solidaires d'un chariot 47.

Le chariot 47 est mobile en translation. Il est fixé sur des tiges glissières 48. Les tiges glissières sont fixées sur le bâti 49.

L'extrémité de la tige 50 d'un vérin hydraulique 51, solidaire du bâti 49, est fixée au chariot 47.

Le fonctionnement de cet ensemble est le suivant :

Le moteur 33 entraîne en rotation le disque 35 par l'intermédiaire du réducteur de vitesse 34. Dans sa rotation, le disque 35 entraîne le cardan 36 et l'extrémité correspondante de la bielle 37.

Lorsque le centre du cardan 38 est situé sur l'axe de rotation, aucun mouvement n'est communiqué au conduit 8 qui reste immobile. Si l'axe du système moteur est déplacé par rapport à cette position de repos, chaque tour du disque 35 correspond à un mouvement alternatif.

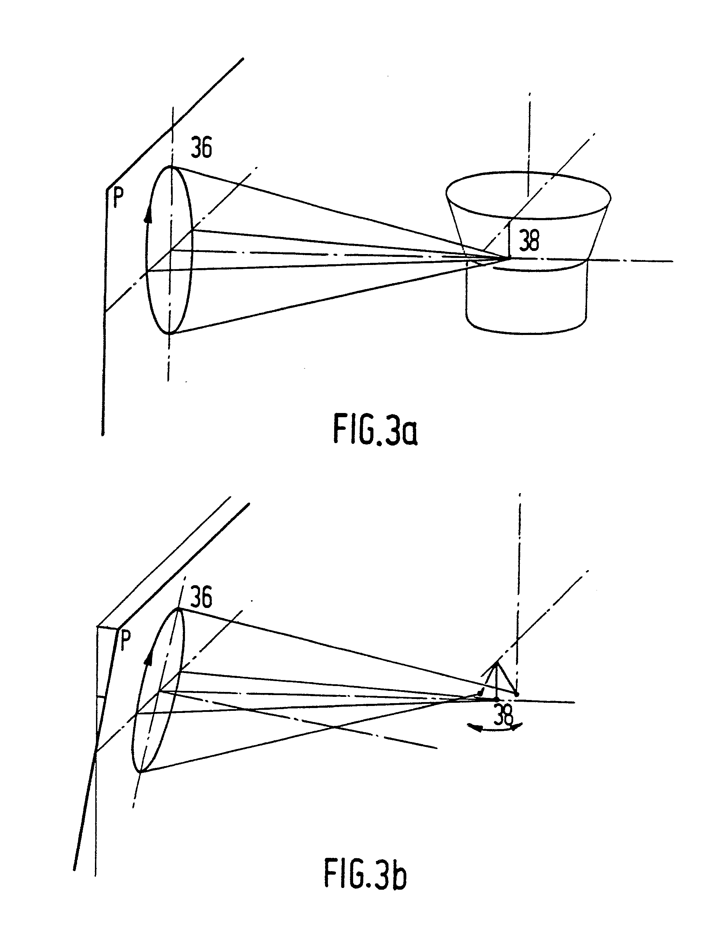

Les schémas des figures 3a et 3b montrent le principe de ce mouvement. Le centre du cardan 36 décrit un cercle dans un plan P. Lorsque le centre du cardan 38 est sur l'axe de rotation (figure 3a), il reste immobile. Toutes les positions du cardan 36 sont à même distance du point de « repos » du cardan 38. Lorsque ce même plan est incliné et donc que l'axe de rotation s'écarte du point de repos du centre du cardan 38, la rotation du cardan 36 entraîne un mouvement de va-et-vient dont l'amplitude est fonction de l'écart entre l'axe de rotation et le centre du cardan 38 (figure 3b).

Dans le mode représenté, le déplacement de l'axe de rotation est obtenu en faisant basculer le plan dans lequel se déplace le cardan 36. En faisant en sorte que l'axe du basculement du plan passe par le centre du cercle décrit par le cardan 36, on obtient un mouvement alternatif sur le conduit de guidage 8 qui est sensiblement symétrique de part et d'autre de la position de repos sans avoir à modifier d'autres paramètres. Cette disposition est donc préférée.

Le basculement du plan P est obtenu en faisant tourner la plateforme 39 autour de l'axe 40. Pour obtenir le deplacement quasi symétrique dont il est question ci-dessus, l'axe 40 est disposé de telle sorte qu'il rencontre l'axe de rotation de l'ensemble moteur 33, réducteur 34, disque 35, et que le point de rencontre se situe au centre du cercle décrit par le cardan 36.

D'autres dispositions sont possibles, mais entraînent nécessairement une dissymétrie du mouvement oscillant du conduit 8 par rapport à la position de repos.

Le déplacement de la plateforme 39 au moyen du vérin 42 n'intervient bien évidemment que lorsqu'une modification du mouvement oscillant du conduit 8 est entreprise. L'inclinaison plus ou moins importante de la plateforme 39 se traduit par des modifications de l'amplitude des oscillations du conduit de guidage 8. Plus l'inclinaison est grande, plus le mouvement oscillant est ample.

Pour des raisons de simplicité dans le mode représenté, le basculement se fait autour d'un axe 40 horizontal mais d'autres positions de l'axe conviendraient également pour engendrer ce mouvement oscillant, notamment une position verticale.

L'amplitude étant déterminée de la façon que nous venons d'indiquer, il est aussi possible de modifier la direction médiane du conduit 8 dans ce mouvement oscillant. Dans ce but, l'ensemble moteur y compris la plateforme 39, les pieds 41, le vérin 42 et les montants 46 sont disposés sur le chariot 47.

Le mouvement de la tige 50 du vérin 51 déplace le chariot 47 le long des tiges glissières 48. Ce deplacement entraîne un déplacement analogue du centre du cardan 38.

La translation du chariot 47 est de préférence effectuée dans une direction sensiblement parallèle à l'axe de rotation du disque 35 en position de repos. Dans ces conditions, une translation du chariot ne modifie pratiquement pas l'amplitude des oscillations du conduit de guidage 8. Autrement dit, dans la disposition préférée représentée à la figure 2, les modifications d'amplitude et de direction médiane du mouvement oscillant peuvent être réglées indépendamment l'une de l'autre.

Il est clair que grâce à ce dispositif, les modifications des oscillations du conduit 8 peuvent être entreprises en cours de fonctionnement. Il n'est pas nécessaire d'interrompre le balancement du conduit 8. Il est clair aussi que le réglage au moyen des verins 42 et 51 permet toutes les combinaisons souhaitables.

Les vérins de réglage peuvent être remplacés par des moyens équivalents notamment par des systèmes de vis associés à des moteurs électriques, ou par tout autre moyen permettant de communiquer un mouvement continu et pouvant être maintenu en position fixe.

Ce mode de réglage de l'amplitude et de la direction médiane permet aussi une automatisation très poussée dans la mesure où les vérins (ou les moyens équivalents) peuvent être commandés par un ensemble de régulation en fonction des mesures effectuées elles-mêmes en continu et de façon automatique.

La fréquence des oscillations est aussi modifiable en changeant le régime du moteur-variateur 33.

Dans les installations de production des feutres, ordinairement plusieurs machines sont alignées. Les fibres produites par chaque machine se superposent en couches successives dans le même feutre. La distribution des fibres dans chaque couche est importante pour la répartition globale.

En fonction de la vitesse de passage du convoyeur de réception, de la fréquence des oscillations et de la geométrie de l'installation il peut être nécessaire de faire en sorte que les différents conduits de guidage de chaque machine soient en phase ou au contraire se trouvent déphasés de façon constante les uns par rapport aux autres.

Pour permettre un réglage des phases, un détecteur 52 permet de repérer la position de la roue 35 (par exemple par un contact de proximité inductif avec un ergot 53 placé sur la roue) ou plus exactement celle du cardan 36 dans son mouvement de rotation. Les signaux émis par les détecteurs de la position de chaque disque 35 sont envoyés dans un ensemble électronique où ils sont comparés à des consignes de phases sélectionnées par l'opérateur. En fonction des écarts constatés avec les consignes de déphasage, l'ensemble engendre automatiquement une réponse en direction du moteur-variateur 33 qui par des accélérations ou ralentissements momentanés permet d'établir les déphasages choisis.

La construction et les dimensions de la transmission mécanique sont choisies de façon que le balancement du conduit de guidage 8 puisse répondre à tous les besoins pratiques. Autrement dit, les limites du mouvement, matérialisées par exemple sur la figure 1 par l'angle B formé par l'axe du conduit dans les positions extrêmes, sont telles que le courant gazeux déborderait la largeur du convoyeur s'il ne se heurtait pas aux parois latérales 5.

Le dispositif de distribution utilisé selon l'invention se prête à des corrections fréquentes du mode de distribution telles que celles-ci peuvent apparaître nécessaires dans la production des feutres.

En effet, la dispersion des fibres sur le convoyeur, quelles que soient les précautions prises, est soumise à de nombreux aléas. On comprend qu'il soit très difficile de maintenir parfaitement stables les flux gazeux à l'intérieur de l'enceinte 4. En plus du courant portant les fibres, il se développe des courants induits importants. En outre dans une même enceinte sont rassemblés habituellement plusieurs dispositifs de formation de fibres dont les courants gazeux ne manquent pas d'influer les uns sur les autres. Par suite et en dépit de l'aspiration établie sous le convoyeur, l'enceinte 4 est le siège de turbulences importantes. A ces causes d'irrégularités s'ajoute, le cas échéant, un manque d'uniformité accidentel dans l'aspiration.

Quelles qu'en soient les raisons, l'expérience montre qu'en cours de fonctionnement des irrégularités dans la distribution transversale des fibres apparaissent qui se maintiennent pendant des périodes relativement longues, de sorte qu'il est souhaitable de modifier les conditions de fonctionnement du conduit de guidage pour tenter de rétablir une meilleure uniformité.

Un autre avantage de l'utilisation des moyens, selon l'invention, pour actionner le conduit de guidage est de permettre une commande automatisée. En effet, les variations dont il est question ci-dessus se produisent de façon fortuite. Il est donc très souhaitable que les corrections puissent intervenir dès qu'un défaut de distribution est détecté.

Pour réaliser une telle régulation le dispositif selon l'invention pour la distribution des fibres est associé à un ensemble de mesure de la répartition et à des moyens de calcul.

Le produit fabriqué est analysé par exemple par un ensemble d'absorption de rayons X. Le résultat de ces mesures est envoyé aux moyens de calcul, lesquels reçoivent aussi les informations concernant les paramètres déterminant le fonctionnement du système de distribution : fréquence, amplitude et direction médiane du mouvement du conduit de guidage, vitesse du convoyeur. En fonction des consignes mises en mémoire, les moyens de calcul élaborent des réponses qui, en modifiant les paramètres en question, tendent a corriger les défauts de distribution constatés.

Les réponses engendrées tiennent compte de l'influence respective des divers paramètres du mouvement du conduit de guidage sur la répartition des fibres dans le feutre. De façon générale, les réponses sont préétablies en tenant compte des considérations suivantes.

La fréquence doit être suffisante pour que la totalité de la surface du convoyeur en mouvement soit effectivement couverte par le flux portant les fibres. Lorsque plusieurs dispositifs de formation de fibres sont mis en œuvre pour produire un même feutre, un recouvrement complet par chacun des flux n'est pas toujours indispensable. Il suffit que l'effet d'ensemble de ces dispositifs corresponde effectivement à un recouvrement complet.

A l'inverse il n'est pas avantageux de trop accroître la fréquence. L'amélioration qu'on peut en obtenir n'est pas sensible et l'on se heurte à l'inertie du voile de fibres. Au-delà d'une certaine fréquence on constate que le mouvement du courant gazeux ne parvient plus à suivre celui que l'on impose au conduit de guidage. Une régulation efficace de la répartition des fibres devient alors impossible.

Il est possible de prévoir une régulation de la fréquence par exemple en fonction d'un optimum préalablement déterminé pour chaque masse par unité de surface. La régulation de la fréquence peut alors être conduite en combinaison avec le réglage de la vitesse de défilement du convoyeur en fonction de la masse par unité de surface moyenne mesurée sur toute la largeur du feutre.

L'amplitude et la direction médiane du mouvement du conduit de guidage déterminent directement la distribution transversale des fibres. L'utilisation des conduits de guidage dans les modes traditionnels a permis de dégager des résultats simples sur la manière dont ces paramètres agissent sur la répartition. La modification de la direction médiane, l'amplitude restant constante, entraîne un déplacement du dépôt des fibres dans le même sens que cette modification. Compte tenu de la présence des parois latérales, ce déplacement se traduit en fait par un accroissement de la masse de fibres par unité de surface du côté vers lequel s'effectue le deplacement. De même, on constate qu'un accroissement de l'amplitude du mouvement favorise le dépôt des fibres sur les bords du convoyeur au détriment du centre et réciproquement.

Les mesures de masse de fibres par unité de surface et leur traitement par les calculs ont notamment pour but d'aboutir au meilleur réglage possible de ces paramètres.

La mise en œuvre de l'invention décrite ci-dessus contribue largement à l'amélioration de la distribution des fibres dans les feutres formés.

La facilité et la précision des réglages du mouvement d'oscillation est un facteur important de cette amélioration. L'automatisation du réglage est un autre facteur important.

Grâce à des moyens de distribution et à leur automatisation il est possible, selon l'invention, d'obtenir des feutres larges (de 2 m ou plus) pour lesquels la variation de masse par unité de surface est inférieure à 5 % sur toute la largeur du feutre.

**Revendications**

1. Installation pour la formation d'un feutre de fibres comprenant un ensemble de production de fibres engendrant un courant gazeux portant les fibres, ce courant gazeux portant les fibres dans une enceinte de réception (4), un convoyeur (3) perméable aux gaz constituant une paroi de cette enceinte, le convoyeur laissant passer les gaz et retenant les fibres qui se rassemblent en formant le feutre (7), un dispositif conférant au courant gazeux portant les fibres un mouvement oscillant dans le sens de la largeur du convoyeur, le dispositif conférant un mouvement oscillant au courant gazeux étant constitué par un conduit de guidage (8) mobile dont le mouvement est modifiable au moyen d'une bielle, caractérisée en ce que la bielle (37) est fixée à chacune de ses extrémités par une articulation de cardan (36, 38), un cardan (38) étant solidaire du conduit de guidage (8), l'autre cardan (36) étant fixé sur un élément (35) qui l'entraîne dans un mouvement de rotation dont l'axe, lorsque le conduit est immobile, passe par le centre du cardan (38) lié au conduit de guidage (8) et s'écarte du centre du cardan lorsqu'un mouvement d'oscillation du conduit de guidage (8) est engendré.

2. Installation selon la revendication 1 dans laquelle le déplacement de l'axe de rotation engendrant le mouvement d'oscillation de l'élément (35) est tel que le centre du cercle décrit par le centre du cardan (36) qui lui est fixé ne soit pas modifié.

3. Installation selon la revendication 2 dans laquelle le déplacement de l'élément (35) engendrant le mouvement d'oscillation est une rotation autour d'un axe horizontal ou vertical passant par le centre du cercle décrit par le centre du cardan (36).

4. Installation selon la revendication 3 dans laquelle l'élément (35) et l'ensemble moteur (33, 34) sont disposés sur une plateforme mobile en rotation autour d'un axe (40), le déplacement de la plateforme étant assuré au moyen d'un vérin hydraulique (42).

5. Installation selon l'une quelconque des revendications précédentes dans laquelle la direction médiane du conduit de guidage (8) est en outre réglée par translation de l'ensemble assurant le mouvement d'oscillation.

6. Installation selon la revendication 5 dans laquelle le mouvement de translation est obtenu en disposant l'ensemble assurant le mouvement d'oscillation sur un support (47) mobile sur des glissières (48) animé par un vérin hydraulique (51).

7. Installation selon l'une quelconque des revendications précédentes dans laquelle l'élément (35) est entraîné en rotation au moyen d'un moteur-variateur (33) permettant de faire varier la vitesse de rotation et par suite la fréquence des oscillations.

8. Installation selon l'une des revendications 4, 6 et 7 comprenant en outre un ensemble de mesure de la répartition des fibres transversalement au convoyeur (3), des moyens de calcul pour le traitement des mesures et leur comparaison avec des consignes en mémoire, les moyens de calcul élaborant des signaux commandant les mouvements d'un ou des deux vérins (42, 51).

9. Installation selon la revendication 8 dans laquelle en outre les moyens de calcul élaborent des signaux commandant la fréquence d'oscillation en modifiant la vitesse du moteur-variateur (33).

**Claims**

1. Plant for forming a felt of fibres and comprising a fibre producing assembly generating a flow of gas carrying the fibres, the said gas flow carrying the fibres into a receiving enclosure (4), a gas permeable conveyor (3) constituting a wall of this enclosure, the conveyor allowing the gases to pass through it and retaining the fibres which gather together and form the felt (7), a device imparting to the flow of gas carrying the fibres an oscillating movement in the direction of the width of the conveyor, the device which limparts the said oscillating movement to the flow of gas being constituted by a movable guide duct (8), the movement of which can be modified by a connecting rod, characterised in that the connecting rod (37) is fixed at each of its ends by a cardan joint (36, 38), a cardan joint (38) being rigid with the guide duct (8), the other cardan joint (36) being fixed on an element (35) which drives it with a rotary movement the axis of which, when the duct is immobile, passes through the centre of the cardan joint (38) connected to the guide duct (8) and moves away from the centre of the cardan joint (38) when an oscillating movement of the guide duct (8) is generated.

2. Installation according to Claim 1 in which displacement of the rotary axis generating the oscillating movement of the element (35) is such that the centre of the circle described by the centre of the cardan joint (36) which is fixed to it is not altered.

3. Installation according to Claim 2 in which the displacement of the element (35) generating the oscillating movement is a rotation about a horizontal or vertical axis passing through the centre of the circle described by the centre of the cardan joint (36).

4. Installation according to Claim 3 in which the element (35) and the motor assembly (33, 34) are disposed on a platform (39) adapted for rotary movement about an axis (40), displacement of the platform being ensured by a hydraulic jack (42).

5. Installation according to any one of the preceding Claims in which the median direction of the guide duct (8) is furthermore regulated by a translatory movement of the assembly which provides for the oscillating movement.

6. Installation according to Claim 5 in which the translatory movement is obtained by disposing the assembly which provides the oscillating movement on a support (47) adapted to move on slides (48) and driven by a hydraulic jack (51).

7. Installation according to any one of the preceding Claims in which the element (35) is caused to rotate by means of a variable speed motor (33) which makes it possible to vary the rotary speed and thus the frequency of the oscillations.

8. Installation according to one of Claims 4, 6 and 7, comprising furthermore an assembly for measuring the distribution of fibres transversely across the conveyor (3), means of calculation for processing the measurements and comparing them with references stored in the memory, the calculating means processing signals controlling movements of one or both jacks (42, 51).

9. Installation according to Claim 8 in which, in addition, the calculating means process signals controlling the frequency of oscillation by modifying the speed of the variable speed motor (33).

**Patentansprüche**

1. Vorrichtung zur Bildung einer Fasermatte, enthaltend eine Produktionsanlage für Fasern, die einen die Fasern tragenden Gasstrom erzeugt, wobei der Gasstrom die Faser in einen Aufnahmeraum (4) trägt, ein gasdurchlässiger Förderer (3) eine Wand dieses Raums bildet, der Förderer das Gas durchläßt und die Fasern, die sich unter Bildung der Matte (7) sammeln, zurückhält, eine Vorrichtung, die dem fasertragenden Gasstrom eine in Querrichtung des Förderers oszillierende Bewegung gibt, wobei die Vorrichtung, die dem Gasstrom eine oszillierende Bewegung gibt, von einem beweglichen Leitschacht (8) gebildet wird, dessen Bewegung mit Hilfe einer Pleuelstange modifizierbar ist, dadurch gekennzeichnet, daß die Pleuelstange (37) an jedem Ende mit einem Kardangelenk (36, 38) befestigt ist, wobei ein Kardangelenk (38) mit dem Leitschacht (8) fest verbunden ist, das andere Kardangelenk (36) an einem Element (35) befestigt ist, das ihm eine Drehbewegung verleiht, deren Achse, wenn der Leitschacht ruhend ist, durch den Mittelpunkt des mit dem Leitschacht (8) verbundenen Kardangelenks (38) verläuft und sich vom Mittelpunkt des Kardangelenks (38) entfernt, wenn eine Oszillationsbewegung des Leitschachtes (8) erzeugt wird.

2. Vorrichtung nach Anspruch 1, bei der die Bewegung der Rotationsachse, die die oszillierende Bewegung des Elements (35) erzeugt, so ist, daß der Mittelpunkt des Kreises, der vom Mittelpunkt des Kardangelenks (36) beschrieben wird, der an ihm befestigt ist, nicht verändert wird.

3. Vorrichtung nach Anspruch 2, bei der die Bewegung des Elements (35), die die Oszillationsbewegung erzeugt, eine Drehung um eine horizontale oder vertikale Achse ist, die durch den Mittelpunkt des vom Mittelpunkt des Kardangelenks (36) gebildeten Kreises verläuft.

4. Vorrichtung nach Anspruch 3, bei der das Element (35) und die Motorgruppe (33, 34) auf einer Bühne (39), welche um eine Achse (40) drehbeweglich ist, angeordnet sind, wobei die Bewegung der Bühne mittels eines Hydraulikzylinders (42) sichergestellt ist.

5. Vorrichtung nach einem der vorstehenden Ansprüche, in der die mittlere Richtung des Leitschachtes (8) unter anderem durch eine Verschiebung der Einheit, die die Oszillationsbewegung sicherstellt, geregelt ist.

6. Vorrichtung nach Anspruch 5, in der die Translationsbewegung dadurch erhalten wird, daß man die Einheit, die die Oszillationsbewegung sicherstellt, auf eine Halterung (47) anordnet, die auf Führungsschienen (48) beweglich ist und von einem Hydraulikzylinder (51) angeregt wird.

7. Vorrichtung nach einem der vorstehenden Ansprüche, in der das Element (35) mittels eines Motorgetriebes (33), das die Drehgeschwindigkeit und infolge davon die Frequenz der Oszillationen verändern kann, angetrieben wird.

8. Vorrichtung nach einem der Ansprüche 4, 6 und 7, enthaltend unter anderem eine Meßanlage für die Verteilung der Fasern quer zum Förderer (3), Mittel zur Berechnung für die Behandlung der Maße und ihren Vergleich mit Sollmaßen im Speicher, wobei die Mittel zur Berechnung Signale ausarbeiten, die die Bewegung des oder der Kardangelenk(e) steuern.

9. Vorrichtung nach Anspruch 8, wobei unter anderem die Mittel zur Berechnung Signale ausarbeiten, die die Oszillationsfrequenz unter Abänderung der Geschwindigkeit des Motor-Getriebes (33) steuern.

0 125 963

FIG.1

FIG.2

FIG.3a

FIG.3b